# EUROPÄISCHE PATENTANMELDUNG

(11) **EP 1 178 619 A2**
(43) Veröffentlichungstag der Anmeldung: **06.02.2002**
(21) Anmeldenummer: 01115928.2
(22) Anmeldetag: 29.06.2001
(51) Int. Cl.: H04H 1/00

(54) **System zum drahtlosen Übertragen von Audio- und/oder Video-Daten aus dem Internet zu nicht mit dem Internet verbundenen Benutzern**

(30) Priorität: 24.07.2000 DE 10035993
(71) Anmelder: Rohde & Schwarz FTK GmbH, 12557 Berlin (DE); Deutsche Telekom AG, 53113 Bonn (DE)
(72) Erfinder: Zurek-Terhardt, Günther, 15537 Erkner (DE); Biedermann, Matthias, 12683 Berlin (DE)
(74) Vertreter: Körfer, Thomas, Dipl.-Phys.

(57) **Zusammenfassung**

Die Erfindung betrifft ein System zum drahtlosen Übertragen von im Internet bereitgestellten digitalen Audio- und/oder Video-Datenströmen zu mehreren nicht mit dem Internet verbundenen Benutzern unter Verwendung eines digitalen oder analogen Rundfunksystems, das zur Übertragung von Internet-Protokollen geeignet ist. Wobei die zu übertragenden Audio- und/oder Video-Datenströme über einen mit dem Internet bidirektional verbundenen Konverter aus dem Internet ausgelesen und in eine unidirektionale Multipunkt-Verbindung umgewandelt und über einen Multiplexer dem Rundfunksystem zugeführt und durch dieses ausgestrahlt werden, und in den diesem Rundfunksystem zugeordneten Empfängern jeweils wie beim Internet über die den Audio- und/oder Video-Datenströmen zugeordneten Signalisierungen die empfangsseitig wieder zusammengesetzten Audio- und/oder Video-Datenströme auswählbar und als Ton und/oder Bildsignale auf einer Ton- bzw. Bildwiedergabeeinrichtung wiedergegeben werden.

## Beschreibung

Die Erfindung betrifft ein System laut Oberbegriff des Hauptanspruches.

Das inzwischen weit verbreitete Internet besitzt den Nachteil, daß ein Zugriff nur über eine unmittelbare bidirektionale Verbindung möglich ist. Die inzwischen vielfach angebotenen Audio- und/oder Video-Daten können deshalb ebenfalls nur über eine entsprechende bidirektionale Verbindung empfangen werden.

Es ist Aufgabe der Erfindung, ein System aufzuzeigen, mit dem solche Audio- und/oder Video-Daten des Internets auch drahtlos empfangen werden können.

Diese Aufgabe wird ausgehend von einem System laut Oberbegriff des Hauptanspruches durch dessen kennzeichnende Merkmale gelöst. Vorteilhafte Weiterbildungen ergeben sich aus den Unteransprüchen.

Die Erfindung macht sich die Erkenntnis zunutze, daß es inzwischen verschiedenartige Rundfunksysteme gibt, die zur Übertragung von Internet-Protokollen geeignet sind. So ist beispielsweise das digitale Hörfunk-System DAB (Digital Audio Broadcast) für die Übertragung von Internet-Protokollen IP (Internet-Protokoll) geeignet (nach Vorschlag ETSI TS101759DAB Data Broadcasting). Auch das digitale Fernsehsystem DVB (Digital Video Broadcast) sieht eine solche Möglichkeit über das Übertragungsprotokoll MPEG-2 vor (Multiprotocol Encapsulation EN301192 DVB Specification for Data Broadcasting ISO/IEC 13818-6 Extensions for DSM-CC). Durch den Einsatz eines solchen IP-fähigen Rundfunksystems können die im Internet bereitgestellten digitalen Audio- und/oder Video-Datenströme drahtlos zu beliebig vielen Benutzern übertragen werden, die ihrerseits nicht mit dem Internet direkt verbunden sind und denen es damit möglich ist, auch solche im Internet übertragenen Video- oder Audio-Sendungen zu empfangen. Dazu ist es lediglich erforderlich, die aus dem Internet über eine bidirektionale Verbindung auslesbaren Datenströme in entsprechende unidirektionale Multipunkt-Verbindungen zu konvertieren, die dann unidirektional über das Rundfunksystem zu den entsprechenden Empfängern übertragen werden und dort dann wieder zu den ursprünglichen Internet-Datenströmen zusammengesetzt genauso wie im Internet über einen entsprechenden Internet-Browser ausgewählt und als Ton- bzw. Bildsignale wiedergegeben werden können. Das erfindungsgemäße System ist dabei unabhängig von dem beim Rundfunksystem verwendeten Codierverfahren, also beispielsweise unabhängig von dem beim DAB verwendeten Komprimierungsverfahren MUSICAM bzw. dem beim DVB verwendeten MPEG-2-Codierverfahren. Empfangsseitig ist nur eine zusätzliche Einheit zur Verarbeitung der übertragenen Datenströme erforderlich, für den Empfang der Rundfunksignale sind die üblichen Empfänger des Rundfunksystems geeignet. Senderseitig können die Daten unmittelbar aus dem Internet ausgelesen werden, eine gesonderte Zufuhr der Daten zum Sender ist nicht erforderlich. Auch künftige Verbesserungen bezüglich Codierung und Komprimierung bei den Audio- und/oder Video-Datenströmen können für das erfindungsgemäße System ausgenutzt werden.

Wenn im Internet die zu übertragenden Datenströme als Punkt-zu-Punkt(unicast)-Übertragung bereitgestellt werden, ist im Konverter eine entsprechende Umwandlung in eine Punkt-zu-Multipunkt(multicast)-Übertragung erforderlich. Diese kann jedoch entfallen, wenn im Internet bereits eine Punkt-zu-Multipunkt-(unicast to multicast)-Übertragung bereitgestellt wird, in diesem Fall ist dann nur die Umwandlung in den unidirektionalen Datenstrom mit zugehörigem Protokoll erforderlich.

Auch die senderseitige Abfrage und Übertragung der zur Auswahl der gewünschten Video- bzw. Audio-Datenströme erforderlichen Signalisierungen (z.B. web pages, etc.) ist überflüssig, wenn diese Signalisierung bereits implizit empfangsseitig bekannt ist. Wenn ein kontinuierlicher Empfang der Daten über das Internet gesichert ist, können auch die zusätzlichen Zwischenspeicher nach den Konvertern entfallen. Das verwendete Rundfunksystem kann gleichzeitig auch das ursprünglich hierfür vorgesehene Rundfunkprogramm übertragen oder auch zusätzliche andere Datenströme, beispielsweise lokal eingespeiste Datenströme mit einem Einfüger für das Internet-Protokoll (IP-Inserter). Auch andere statische Informationen wie Dateien können gleichzeitig mit zu den Empfängern übertragen werden. Der Zugriff auf die empfangsseitigen Audio- und/oder Video-Datenströme erfolgt, wie beim Internet üblich, über einen Browser, gegebenenfalls auch über eine zwischengeschaltene Proxy-Einheit. Für die Übertragung kann entweder die gesamte, im Rundfunksignal zur Verfügung stehende Übertragungskapazität für den erfindungsgemäßen Zweck genutzt werden, oder gegebenenfalls auch nur ein Teil hiervon, während ein anderer Teil für andere Zwecke genutzt wird.

Die Erfindung wird im folgenden anhand schematischer Zeichnungen an einem Ausführungsbeispiel näher erläutert.
- Fig. 1: zeigt die senderseitige Anordnung des erfindungsgemäßen Systems zum Auslesen und Konvertieren von Audio- und Video-Datenströmen aus dem Internet und Abstrahlung über einen Rundfunksender;
- Fig. 2: zeigt einen zugehörigen Rundfunkempfänger zur Wiedergabe dieser Audio- und Video-Datenströme aus dem Internet.

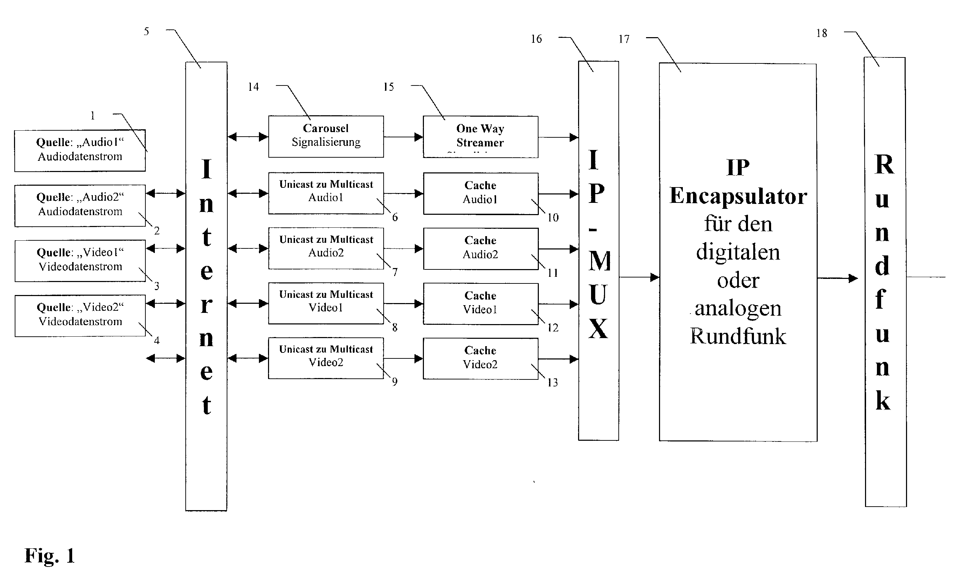

Die zu übertragenden Audio- und/oder Video-Datenströme werden gemäß Fig. 1 über verschiedene Datenquellen 1, 2, 3, 4 im Internet 5 in bekannter Weise bereitgestellt. Sie können durch eine Punkt-zu-Punkt(unicast)-Verbindung aus dem Internet abgerufen werden. Gemäß der Erfindung geschieht dies durch entsprechende Konverter 6, 7, 8, 9, die über eine bidirektionale Punkt-zu-Punkt-Verbindung mit dem Internet 5 verbunden sind. Diese Konverter 6 bis 9 empfangen die gewünschten Datenströme der Quellen 1 bis 4 und wandeln sie gleichzeitig um in eine unidirektionale Punkt-zu-Multipunkt(multicast)-Verbindung, über die sie mit Zwischenspeichern 10 bis 13 verbunden sind. Diese Zwischenspeicher gleichen wechselnde Übertragungsgeschwindigkeiten auf der Unicast-Verbindung zu den jeweiligen Quellen 1 bis 4 der Datenströme aus, da diese Verbindung häufig über eine Datenverbindung mit einer nicht garantierten Übertragungsgeschwindigkeit durchgeführt wird. Das System arbeitet unabhängig von der Anzahl der verwendeten Quellen und kann durch Hinzunahme weiterer Konverter und Zwischenspeicher erweitert werden.

Solche Konverter einerseits zur Umwandlung von bidirektionalen Verbindungen in unidirektionale Verbindungen und gleichzeitig zur Umwandlung einer Unicast-Verbindung in eine Multicast-Verbindung sind an sich bekannt und werden beispielsweise beschrieben in ... .Gleichzeitig wird über einen weiteren Konverter 14 und eine entsprechende bidirektionale Verbindung die zugehörige Signalisierung der zu übertragenden Audio- und/oder Video-Datenströme aus dem Internet 5 ausgelesen, also die zugehörigen Informationen zur Auswahl der entsprechenden Audio- bzw. Video-Programme, wie sie im allgemeinen beispielsweise durch Web-Seiten wiedergegeben werden. Dieser Konverter 14 wiederholt diese ausgelesenen Signalisierungen zyklisch und führt sie über eine bidirektionale Verbindung zu einem Wandler 15, der die bidirektionale Übertragung wieder umwandelt in einen unidirektionalen Datenstrom. In diesem Wandler 15 wird außerdem ein spezielles Protokoll für die Übertragung der Daten über das Rundfunksystem erzeugt. Diese so in den Einheiten 10 bis 13 und 15 aufbereiteten unidirektionalen Datenströme werden einem IP-Multiplexer 16 zugeführt und dort zusammengefaßt einem IP-Encapsulator 17 zugeführt, der in der oben erwähnten bekannten Art und Weise die Übertragung von Internet-Protokollen über ein übliches Rundfunksystem ermöglicht. Geeignet hierfür ist beispielsweise der eingangs erwähnte Multiprotokoll-Encapsulator des DVB-Rundfunksystems bzw. der entsprechende Standort des DAB-Systems. In diesem IP-Encapsulator 17 wird der zusammengesetzte Datenstrom der Internet-Protokolle aus dem Multiplexer 16 in das entsprechende Format des Rundfunksystems verpackt, dieses Format ist abhängig von dem verwendeten System des digitalen bzw. analogen Rundfunks. Diese so aufbereiteten Daten werden gemeinsam mit eventuellen weiteren Daten, die ausschließlich für das Rundfunksystem aufbereitet sind, zusammengeführt und dann über den Sender 18 ausgesendet. Der Rundfunksender 18 ist von bekannter Art, er kann rein digital arbeiten oder es kann sich hierbei auch um einen üblichen analogen Rundfunksender handeln, der in einem gesonderten Kanal die Übertragung von digitalen Daten ermöglicht. In ihm werden in bekannter Weise nach entsprechenden komplexen Verfahren die Daten codiert und gegebenenfalls komprimiert, so daß eine große Datenmenge ausgestrahlt werden kann. Diese Codierung im Rundfunksystem ist unabhängig von der geschilderten Art der Aufbereitung der unidirektionalen Multipunkt-Verbindungen für die Audio- und Video-Datenströme äus dem Internet. Wenn im Internet die zu übertragenden Datenströme bereits als Punkt-zu-Multipunkt-Verbindungen (Multicast) angeboten werden kann bei den Konvertern 6 bis 9 die entsprechende Konvertierung von Unicast zu Multicast entfallen, es ist dann nur die Herstellung einer Multicast-Verbindung erforderlich. Wenn ein kontinuierlicher Empfang der Daten über das Intnernet nicht möglich ist, können auch die Zwischenspeicher 10 bis 13 entfallen. In manchen Fällen kann auch der Konverter 14 mit nachfolgendem Wandler 15 entfallen, nämlich dann, wenn die Signalisierung der bereitgestellten Audio- bzw. Video-Datenströme dem Empfänger implizit bekannt sind und nicht vom Sender zum Empfänger übertragen werden müssen.

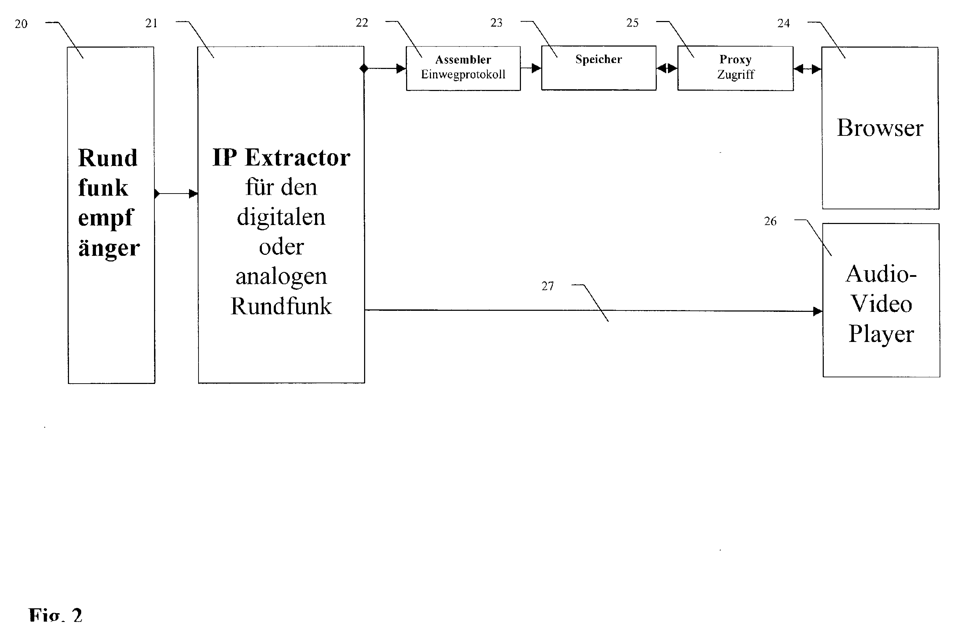

Empfangsseitig werden die über den Sender 18 ausgestrahlten Sendungen gemäß Fig. 2 zunächst über einen üblichen RundfunkEmpfänger 20 empfangen und demoduliert. Aus diesen demodulierten Signalen werden dann in einem nachgeschalteten IP-Extraktor 21 in bekannter Weise die Daten der Internet-Protokolle (IP-Daten) extrahiert und anschließend in der gleichen Weise wie bei einem direkten Zugriff auf das Internet für den Benutzer zur Verfügung gestellt. Dies geschieht mit Hilfe der empfangsseitig bekannten oder der mitübertragenen zugehörigen Signalisierung der Audio- oder Video-Datenströme, (die senderseitig in den Einheiten 14 und 15 erzeugt und zum Empfänger übertragen werden). Die Signalisierung wird aus dem empfangenen Datenstrom herausgefiltert und mit Hilfe des senderseitig im Wandler 15 erzeugten speziellen Übertragungsprotokolls zu der ursprünglichen Information zusammengeführt. Dies geschieht über eine unidirektionale Verbindung des IP-Extraktors 21 in einem Assembler 22, in dem die Signalisierung zusammengefaßt und über eine bidirektionale Verbindung in einem Speicher 23 gespeichert wird. Daraus kann über einen üblichen Internet-Browser 24 direkt oder über eine sogenannte Proxy-Einheit 25 der Benutzer auf die als unidirektionalen Datenstrom aus dem IP-Extraktor 21 einer Ton- bzw. Bildwiedergabeeinrichtung 26 zugeführten unidirektionalen Datenstrom 27 zugreifen und zwar genauso, wie dies bei einer direkten Verbindung zum Internet möglich ist. Der vom Benutzer über die im Speicher 23 ausgewählte Signalisierung bestimmte Audio- bzw. Video-Datenstrom 27 wird in der Einheit 26 in ein entsprechendes Ton- bzw. Bildsignal umgewandelt und dann in bekannter Weise über Lautsprecher bzw. Bildschirm wiedergegeben.

Über den senderseitigen Multiplexer 16 können gleichzeitig auch noch andere Datenströme übertragen werden, beispielsweise am Ort des Senders lokal erzeugte Datenströme wie Dateien oder dergleichen. Für die Übertragung über das Rundfunksystem kann entweder die gesamte zur Verfügung stehende Übertragungskapazität für den erfindungsgemäßen Zweck genutzt werden oder gegebenenfalls nur ein Teil hiervon, während der andere Teil für andere Zwecke genutzt wird.

## Patentansprüche

1. System zum drahtlosen Übertragen von im Internet bereitgestellten digitalen Audio- und/oder Video-Datenströmen zu mehreren nicht mit dem Internet verbundenen Benutzern,
**gekennzeichnet durch**
die Verwendung eines digitalen oder analogen Rundfunksystems, das zur Übertragung von Internet-Protokollen geeignet ist,
wobei die zu übertragenden Audio- und/oder Video-Datenströme über einen mit dem Internet bidirektional verbundenen Konverter aus dem Internet ausgelesen und in eine unidirektionale Multipunkt-Verbindung umgewandelt und über einen Multiplexer dem Rundfunksystem zugeführt und **durch** dieses ausgestrahlt werden,
und in den diesem Rundfunksystem zugeordneten Empfängern jeweils wie beim Internet über die den Audio- und/oder Video-Datenströmen zugeordneten Signalisierungen die empfangsseitig wieder zusammengesetzten Audio- und/oder Video-Datenströme auswählbar und als Ton und/oder Bildsignale auf einer Ton- bzw. Bildwiedergabeeinrichtung wiedergegeben werden.

2. System nach Anspruch 1,
**dadurch gekennzeichnet,**
**daß** senderseitig gleichzeitig auch die zur Auswahl der Audio- und/oder Video-Datenströme erforderliche Signalisierung bidirektional aus dem Internet ausgelesen und zyklisch wiederholt unidirektional zusammen mit einem für die Rundfunkübertragung geeigneten Protokoll dem Multiplexer zugeführt und über das Rundfunksystem übertragen wird,
wobei mit dem für die Rundfunkübertragung geeigneten Protokoll empfangsseitig die unidirektionale Signalisierung (Informationen zur Auswahl der gewünschten Datenströme) zu der ursprünglichen bidirektionalen Internet-Signalisierung zusammengesetzt und gespeichert wird, so daß wie beim Internet über einen Browser die unidirektional übertragenen Audio- und/oder Video-Datenströme am Ausgang des zum Empfang von Internet-Protokollen geeigneten Empfängers auswählbar und als Ton- und/oder Bildsignale wiedergebbar sind.

3. System nach Anspruch 2,
**dadurch gekennzeichnet,**
**daß** die bidirektional aus dem Internet ausgelesene Signalisierung in einer Wiederholeinheit (Carousel) zyklisch wiederholt wird und in einem Unidirektional-Konverter (one way streamer) als unidirektionaler Datenstrom zusammen mit dem in diesem Konverter erzeugten Protokoll für die Rundfunkübertragung dem Multiplexer zugeführt wird und dort mit den unidirektionalen Audio- und/oder Video-Datenströmen zusammengefaßt wird.

4. System nach einem der vorhergehenden Ansprüche,
**dadurch gekennzeichnet,**
**daß** zwischen dem Konverter für die Audio- und/oder Video-Datenströme und dem Multiplexer jeweils ein Zwischenspeicher (Cache) angeordnet ist.

5. System nach einem der vorhergehenden Ansprüche,
**dadurch gekennzeichnet,**
**daß** für Audio- und/oder Video-Datenströme, die im Internet als Punkt-zu-Punkt(unicast)-Verbindung bereitgestellt sind, der Bidirektional/Unidirektional-Konverter gleichzeitig auch die Umwandlung in eine Punkt-zu-Multipunkt-Verbindung ausgeführt.

6. System nach einem der vorhergehenden Ansprüche,
**dadurch gekennzeichnet,**
**daß** der im Multiplexer erzeugte zusammengesetzte Datenstrom mit einem weiteren über das Rundfunksystem zu übertragenden Datenstrom vereinigt wird.
